# EUROPÄISCHE PATENTSCHRIFT

(11) **EP 3 510 101 B1**
(45) Veröffentlichungstag und Bekanntmachung des Hinweises auf die Patenterteilung: **08.07.2020**
(21) Anmeldenummer: 17762123.2
(22) Anmeldetag: 07.09.2017
(51) Int. Cl.: C08L 55/02, C08L 77/02, C08L 51/04, C08L 67/04, C08L 25/12, C08L 25/06, C08J 3/12, B33Y 10/00, B29C 64/153, B29C 67/04, B33Y 70/00

(54) **THERMOPLASTISCHE POLYMERPULVER FÜR DAS SELEKTIVE LASERSINTERN (SLS)**
THERMOPLASTIC POLYMER POWDER FOR SELECTIVE LASER SINTERING (SLS)
POUDRE POLYMÈRE THERMOPLASTIQUE POUR LE FRITTAGE SÉLECTIF PAR LASER (FSL)

(30) Priorität: 08.09.2016 EP 16187807
(43) Veröffentlichungstag der Anmeldung: 17.07.2019
(73) Patentinhaber: INEOS Styrolution Group GmbH, 60325 Frankfurt (DE)
(72) Erfinder: WILHELMUS, Bianca, 63456 Hanau (DE); NIESSNER, Norbert, 67159 Friedelsheim (DE); WIEBE, Viktor, 51643 Gummersbach (DE); EISENTRÄGER, Frank, 50996 Köln (DE)
(74) Vertreter: Jacobi, Markus Alexander
(86) Internationale Anmeldenummer: PCT/EP2017/072425
(87) Internationale Veröffentlichungsnummer: WO 2018/046582

(56) Entgegenhaltungen:
- EP-A1- 2 802 620
- WO-A1-2005/090056
- CN-A- 101 597 425
- CN-A- 105 400 192
- CN-A- 105 566 894

## Beschreibung

Die vorliegende Erfindung betrifft ein thermoplastisches Polymerpulver und dessen Verwendung als Werkstoff für das Selektive Lasersintern (SLS). Das Polymerpulver enthält ein teilkristallines Polymer, ein amorphes Polymer und einen Verträglichkeitsvermittler sowie gegebenenfalls weitere Additive und/oder Hilfsstoffe. Im Polymerpulver liegen das teilkristalline Polymer, das amorphe Polymer und der Verträglichkeitsvermittler in Form eines Polymerblends vor. Die Erfindung betrifft zudem ein Verfahren zur Herstellung eines thermoplastischen Polymerpulvers und ein Verfahren zum Selektiven Lasersintern (SLS) unter Verwendung des erfindungsgemäßen Polymerpulvers.

Beim Verfahren des Selektiven Lasersinterns (SLS) handelt es sich um ein so genanntes additives Fertigungsverfahren (Additive Manufacturing, AM). Die Verfahren der additiven Fertigung, wie beispielsweise das Selektive Lasersintern (SLS) und das Fused Deposition Modeling (FDM), zeichnen sich insbesondere dadurch aus, dass zur Fertigung des Bauteils kein Werkzeug erforderlich ist. Typischerweise werden additive Fertigungsverfahren zur Herstellung von kleinen Stückzahlen wie Prototypen, Mustern und Modellen verwendet (auch als Rapid Prototyping bezeichnet).

Das Selektive Lasersintern (SLS) ist ein Pulverbettverfahren, wobei dünne Schichten eines Polymerpulvers, welche typischerweise etwa 100 µm dick sind, in einem Bauraum bereitgestellt und mit Hilfe eines Laserstrahls ortsaufgelöst aufgeschmolzen werden. In verwandten Verfahren kann das Aufschmelzen mittels Infrarot-Strahlung oder mittels UV-Strahlung (z.B. UV-LED) erfolgen. Durch das schichtweise Schmelzen und Verfestigen der Pulverpartikel (Sintern) entsteht das Bauteil als Verbindung der einzelnen Schichten. Das Verfahren des Selektiven Lasersinterns und geeignete Polymerpulver werden unter anderem von Schmid, M., Selektives Lasersintern (SLS) mit Kunststoffen (Carl Hanser Verlag München 2015) beschrieben.

Das Verfahren des SLS findet typischerweise in einem beheizten Bauraum statt. Üblicherweise wird nach dem Aufbringen einer Pulverschicht im Bauraum, beispielsweise mittels eines Rakels oder einer Rolle, an den aufzuschmelzenden Stellen Energie durch die Belichtung mit einem Laserstrahl eingebracht. Oftmals wird ein CO₂-Laser, ein Nd:YAG-Laser oder ein Faserlaser verwendet. Die danebenliegenden Polymerpartikel sollen idealerweise nicht mit aufschmelzen. Nach dem ortsaufgelösten Aufschmelzen der Polymerpartikel erstarrt das Polymermaterial wieder und bildet einen Teil des zu erstellenden Bauteils.

Nach dem vollständigen Aufschmelzen und anschließenden Wiedererstarren einer Bauteilschicht wird der Bauraum in der Regel abgesenkt, eine neue Pulverschicht aufgebracht und die Bauprozedur wiederholt. Durch wiederholtes Auftragen neuer Schichten und selektives Aufschmelzen kann so schichtweise das gewünschte Bauteil entstehen. Nicht geschmolzenes Pulver wird nach Abschluss des Aufbauverfahrens und nach Abkühlen des Bauraums typischerweise vom Bauteil abgetrennt.

Für das Selektive Lasersintern können prinzipiell teilkristalline oder amorphe Polymere eingesetzt werden. Bevorzugt werden teilkristalline Polymere beim SLS eingesetzt, da diese einen definierten Schmelzpunkt bzw. -bereich besitzen und so den Aufbau von definierten Bauteilen mit zufriedenstellenden mechanischen Eigenschaften ermöglichen. Es ist jedoch auch möglich, amorphe Polymere einzusetzen. Amorphe Polymere ergeben aber typischerweise keine dicht gesinterten, sondern poröse Bauteile, da amorphe Polymere keinen definierten Schmelzpunkt, sondern eine Glasübergangstemperatur und einen Erweichungsbereich aufweisen. Bauteile aus amorphen Polymeren, wie beispielsweise aus amorphem Polystyrol, sind im Allgemeinen porös, weisen ungenügende mechanische Festigkeit auf und werden daher überwiegend als Modelle für den Formguss verwendet.

Beim SLS werden überwiegend werden Polyamide (PA) eingesetzt, aber auch Polypropylen (PP), Polyoxymethylen (POM), Polylactid (PLA) oder Polystyrol (PS) lässt sich mittels Selektiven Lasersinterns (SLS) zu Bauteilen verarbeiten. Verfahren des SLS unter Verwendung verschiedener Polymere sind unter anderem in WO 96/06881 beschrieben, wobei möglichst dichte Bauteile angestrebt werden.

Für die Anwendung beim SLS werden an die Polymerpulver besondere Anforderungen gestellt, welche zum einen auf die Eigenschaften des Polymers (beispielsweise mechanische und optische Eigenschaften sowie Verhalten der Polymerschmelze) aber zum anderen auch auf die Beschaffenheit des Polymerpulvers (wie Partikelgröße, Partikelgrößenverteilung, Fließ- und Rieselfähigkeit) abzielen.

Die mittlere Partikelgröße (Partikeldurchmesser) des Polymerpulvers muss für die Anwendung beim SLS unter der Schichtdichte der im Bauraum aufgebrachten Schicht liegen, typischerweise unter 200 µm, bevorzugt unter 100 µm. Für die Qualität des Bauteils ist zudem in der Regel eine gleichmäßige und nicht zu breite Partikelgrößenverteilung des Polymerpulvers vorteilhaft. Für die Verwendung beim SLS ist insbesondere entscheidend, dass sich die einzelnen Polymerpulver-Schichten gut und gleichmäßig aufbringen lassen.

Ferner ist wichtig, dass sich das Polymerpulver gut verdichten lässt, so dass Bauteile mit hoher Dichte und guten mechanischen Eigenschaften erhalten werden können. Insbesondere sind Partikelgröße und Partikelgrößenverteilung für eine optimale Auflösung der Bauteilstrukturen entscheidend.

Während des Bauprozesses ist es vorteilhaft, den Bauraum auf eine Temperatur bis kurz unterhalb der Schmelztemperatur des teilkristallinen Polymers oder der Glasübergangstemperatur des amorphen Polymers aufzuheizen, um nur noch einen kleinen Teil der zum Aufschmelzen nötigen Energie mit dem Laserstrahl selbst einbringen zu müssen. Der Bauraum wird bei der Verwendung von teilkristallinen Polymeren zweckmäßigerweise auf eine Temperatur oberhalb der Kristallisationstemperatur des teilkristallinen Polymers geheizt, um vorzeitiges Kristallisieren und übermäßigen Verzug zu vermeiden.

Bei Verwendung von amorphen Polymeren darf der Bauraum in der Regel nicht oberhalb der Glasübergangstemperatur beheizt werden, um ein vorzeitiges Verflüssigen zu vermeiden.

Polyamide, insbesondere Polyamid 12 (Kurzbezeichnung PA12; Polylauryllactam), werden derzeit am häufigsten für das Selektive Lasersintern eingesetzt. Allerdings weisen Polyamide, insbesondere PA12, einige gravierende Nachteile auf. Polyamide weisen eine geringe Recyclingquote beim SLS auf. Das nach einem Bauprozess nicht gesinterte Polymerpulver wird normalerweise vom fertigen Bauteil abgetrennt und soweit möglich in weiteren Bauzyklen wiederverwendet. In der Praxis ist diese Wiederverwendung (Recycling) jedoch deutlich eingeschränkt, da das Polymerpulver durch lange Bauzykluszeiten und hohe Temperaturen im Bauraum in seiner Beschaffenheit verändert wird. Durch diese thermische Belastung verschlechtert sich insbesondere die Fließfähigkeit des Polymerpulvers. Es muss daher in der Regel in hohen Anteilen frisches Polymerpulver zugegeben und oftmals ein hoher Anteil des gebrauchten Polymerpulvers entsorgt werden. Der Anteil des im Prozess wiederverwendeten Polymerpulvers wird durch die Recyclingquote angegeben.

Ein weiterer Nachteil bei der Verwendung von Polyamiden in Verfahren des SLS ist die lange Bauzykluszeit, bedingt durch die Notwendigkeit des langsamen Abkühlens. Da Bauteile aus Polyamid, insbesondere PA12, einen deutlichen Volumenschwund (Verzug) beim Abkühlen des Bauteils aufweisen, ist es notwendig, den Bauraum nach dem Bauzyklus langsam auf Zimmertemperatur abzukühlen, was die gesamte Zykluszeit deutlich erhöht.

Zur Verkürzung der Abkühlphase sind somit zum einen eine möglichst niedrige Bauraumtemperatur und zum anderen ein geringer Volumenschwund des Polymers beim Abkühlen wünschenswert.

Auch die mechanischen Eigenschaften von Bauteilen aus Polyamid, wie PA12, bleiben noch hinter denen zurück, die mit anderen Herstellmethoden wie etwa Spritzguss erzielt werden können. Wünschenswert wäre es daher, ein Polymerpulver bereitzustellen, welches sich beim Selektiven Lasersintern besser verdichten lässt und Bauteile mit verbesserten mechanischen Eigenschaften ermöglicht. Darüber hinaus sind oftmals Bauteile mit glatteren Oberflächen wünschenswert.

Verfahren zur Herstellung von dreidimensionalen Bauteilen aus amorphen Polymeren durch Selektives Lasersintern werden in CN-B 101319075 und US 2014/0121327 beschrieben. Ein dem Selektiven Lasersintern ähnliches Verfahren wird in WO 2016/048357 beschrieben. Hier wird auf das Pulverbett an den zu druckenden Stellen ein lichtabsorbierendes Additiv aufgebracht, welches dann die zum Aufschmelzen des Polymers nötige Energie aus der Strahlung, beispielsweise aus einer LED, aufnimmt und an das zu schmelzende Polymer weitergibt.

Das Dokument CN-A 105 566 894 beschreibt ein Verfahren zur Herstellung eines Polymerpulvers für das Selektive Lasersintern, wobei recyceltes Nylon mit einem Kettenverlängerer und weiteren Additiven vermischt und extrudiert wird.

CN-B 101319075 beschreibt die Verwendung von amorphen SAN-Copolymer zur Herstellung von Modellen für einen Formguss mittels SLS, wobei die Bauteile allerdings eine unerwünschte hohe Porosität aufweisen.

US 2014/0121327 nennt als einen weiteren Nachteil amorpher Polymere die hohe Viskosität der Schmelzen, die es notwendig macht, das Polymer deutlich über die Glasübergangstemperatur hinaus mit dem Laserstrahl zu erhitzen, um ein Zusammensintern der Partikel zu ermöglichen. Hierdurch kann der Schmelzbereich nicht mehr klar abgegrenzt werden und es werden Bauteile mit hoher Porosität erhalten.

Im Stand der Technik sind ebenso Verfahren der additiven Fertigung bekannt, bei denen ein Polymerpulver bestehend aus mehreren verschiedenen Polymeren verwendet wird. Die beschriebenen Verfahren sind jedoch typischerweise auf Polymere beschränkt, welche auf molekularer Ebene miteinander mischbar sind. Zudem weisen die Polymerblend-Pulver bzw. die daraus erzeugten Bauteile weiterhin die oben beschriebenen Nachteile auf.

DE-A 10 2012 015 804 beschreibt Polymerpulver als Werkstoff für die additive Fertigung im Wege eines schichtenweisen Aufschmelzens in einem aufgeheizten Bauraum.

Das Pulver ist eine Mischung (Blend) aus zwei oder mehr auf molekularer Ebene mischbaren Polymeren, wobei insbesondere Blends aus teilkristallinen Polymeren, beispielsweise PA11/PA12, PA6/PA610, PP/POM/PLA und PP/PA12, als günstig beschrieben werden.

EP-B 0 755 321 beschreibt ein Verfahren zur Herstellung eines dreidimensionalen Objekts, beispielsweise mittels SLS, wobei Blends aus miteinander molekular mischbaren Polymeren und Copolymeren verwendet werden. Die Komponenten werden in der Schmelze vermischt, wobei eine Vermischung der Polymere auf molekularer Ebene stattfindet.

US 2011/0129682 und WO 2015/081001 beschreiben Verfahren zum SLS unter Verwendung einer Kombination von Polyolefinen (PP und PE) und hydrierten Styrol-Butadien-Blockcopolymeren. Diese Blends zeigen jedoch nur eine geringe Verbesserung der mechanischen Eigenschaften gegenüber reinem Polypropylen und gegenüber Polyamid 12.

Eine Aufgabe der vorliegenden Erfindung ist es, ein Polymerpulver für das Selektive Lasersintern (SLS) und für vergleichbare Technologien, wie etwa in WO 2016/048357 beschrieben, bereitzustellen, mit dem die oben beschriebenen Nachteile des Standes der Technik behoben werden können. Insbesondere sollen Bauteile mit guten mechanischen Eigenschaften und Oberflächeneigenschaften hergestellt werden, die wenig zum Verzug neigen. Zudem soll durch die Verwendung des erfindungsgemäßen Polymerpulvers eine Verkürzung der Bauzeit, insbesondere der Abkühlzeit ermöglicht werden, so dass Energie und Zeit eingespart werden können und einen höherer Anteil des Polymerpulvers wieder im Prozess verwendet werden kann (hohe Recyclingrate).

Eine weitere Aufgabe der Erfindung besteht in der Bereitstellung eines thermoplastischen Polymerpulvers, das zur Herstellung von transluzenten (lichtdurchlässigen) oder transparenten Bauteile mittels Selektiven Lasersinterns geeignet ist, wobei insbesondere die oben erwähnten Vorteile verwirklicht sind.

Diese Aufgaben werden durch die erfindungsgemäßen thermoplastischen Polymerpulver enthaltend eine teilkristallinen Komponente A, eine amorphen Komponente B und einen Verträglichkeitsvermittler C gelöst. Es wurde überraschenderweise gefunden, dass Blends aus teilkristallinen und amorphen Polymeren, die mit einem Verträglichkeitsvermittler zusammen compoundiert (vermischt) worden sind, besonders vorteilhaft beim Selektiven Lasersintern und vergleichbaren Technologien eingesetzt werden können.

Unter Verwendung der erfindungsgemäßen Polymerpulver, enthaltend mindestens ein teilkristallines Polymer, mindestens ein amorphes Polymer und mindestens einen Verträglichkeitsvermittler, können im Selektiven Lasersintern Bauteile mit vorteilhafter mechanischer Belastbarkeit, wenig Verzug und einer guten Oberflächenbeschaffenheit hergestellt werden.

Insbesondere wurde gefunden, dass Polymerpulver enthaltend ein teilkristallines Polymer (bevorzugt Polyamid), ein Acrylnitril-Butadien-Styrol-Copolymer (ABS) oder ein Styrol-Acrylnitril-Copolymer (SAN) als amorphes Polymer und einen geeigneten Verträglichkeitsvermittler, sich vorteilhaft beim Lasersintern einsetzen lassen. Durch die Verwendung eines leichtfließenden und gut zu verflüssigenden Styrol-Copolymers, z.B. eines ABS, als amorphe Komponente ist es insbesondere möglich, ein Bauteil mit geringer Porosität zu erzeugen.

Polymere Blends aus Polyamiden und amorphen Polymeren, insbesondere amorphen Styrol-Copolymeren, sind bekannt und werden beispielsweise in EP-B 2 802 620 und EP-B 2 393 877 beschrieben. Binäre Polymerblends aus Polyamiden und Styrol-Copolymeren (z.B. SAN oder ABS) weisen aufgrund der Unverträglichkeit der Komponenten eine sehr geringe Zähigkeit auf. Durch Verwendung funktionalisierter Styrol-Acrylnitril-Copolymere (SAN-Copolymere) als Verträglichkeitsvermittler kann die Zähigkeit der Blends signifikant gesteigert werden. Außerdem weisen diese Polymerblends interessante Eigenschaften auf, wie eine hohe Schlagzähigkeit, gute Fließfähigkeit, Chemikalienresistenz und eine hohe Oberflächengüte. Als Verträglichkeitsvermittler eignen sich vor allem Styrol-Acrylnitril-Maleinsäureanhydrid-Terpolymere, Styrol-N-Phenylmaleinimid-Maleinsäureanhydrid-Terpolymere und Methylmethacrylat-Maleinsäureanhydrid-Copolymere.

Die vorliegende Erfindung betrifft ein thermoplastisches Polymerpulver P enthaltend:
(A) 10 bis 89,9 Gew.-%, bevorzugt 30 bis 66 Gew.-%, bezogen auf das gesamte Polymerpulver P, mindestens eines teilkristallinen Polymers A, bevorzugt ausgewählt aus Polyamiden (PA), Polyetherketonen (PEK), Polylactiden (PLA), Polybutylenterephthalat (PBT), Polyethylen (PE), Polypropylen (PP) und syndiotaktischem Polystyrol (PS); insbesondere bevorzugt mindestens eines Polyamids ausgewählt aus PA6 (Polycaprolactam), PA6,6 (Polyhexamethylenadipamid), PA4,6 (Polytetramethylenadipamid), PA5,10 (Polypentamethylenadipamid), PA6,10 (Polyhexamethylensebacamid), PA7 (Polyenantholactam), PA11 (Polyundecanolactam) und PA12 (Polydodecanolactam, Polylauryllactam);
(B) 10 bis 89,9 Gew.-%, bevorzugt 30 bis 66 Gew.-%, bezogen auf das gesamte Polymerpulver P, mindestens eines amorphen Polymers B, B, wobei es sich bei dem amorphen Polymer B um mindestens ein Polymer ausgewählt aus Styrol-Butadien-Blockcopolymeren, Acrylnitril-Butadien-Styrol-Copolymeren, Styrol-Acrylnitril-Copolymeren, α(alpha)-Methylstyrol-Acrylnitril-Copolymeren, Acrylat-Styrol-Acrylnitril-Copolymeren, Methylmethacrylat-Acrylnitril-Butadien-Styrol-Copolymeren, Methylmethacrylat-Butadien-Styrol-Copolymeren, Styrol-Methylmethacrylat-Copolymeren, amorphem Polystyrol und schlagzäh modifiziertem Polystyrol, handelt; bevorzugt ausgewählt aus Styrol-Copolymeren, Styrol-Butadien-Blockcopolymeren, Poly(meth)acrylaten, amorphem Polystyrol, und schlagzäh-modifiziertem Polystyrol (HIPS);
(C) 0,1 bis 15 Gew.-%, bevorzugt 1 bis 10 Gew.-%, bezogen auf das gesamte Polymerpulver P, mindestens eines Verträglichkeitsvermittlers C, ausgewählt aus der Gruppe bestehend aus Styrol-Acrylnitril-Maleinsäureanhydrid-Terpolymeren, Styrol-N-Phenylmaleinimid-Maleinsäureanhydrid-Terpolymeren und Methylmethacrylat-Maleinsäureanhydrid-Copolymeren;
(D) optional 0 bis 5 Gew.-%, bevorzugt 0 bis 3 Gew.-%, bezogen auf das gesamte Polymerpulver P, mindestens eines Additives und/oder Hilfsstoffes, bevorzugt ausgewählt aus der Gruppe bestehend aus Antioxidantien, UV-Stabilisatoren, Stabilisatoren gegen Wärmezersetzung, Peroxidzerstörern, Antistatika, Gleitmitteln, Rieselhilfsmitteln, Entformungsmitteln, Keimbildungsmitteln, Weichmachern, faser- oder pulverförmigen Füll- und Verstärkungsmitteln und Färbemitteln, wie Farbstoffe und Pigmente;
wobei die Summe der Gew.-% der Komponenten A, B, C und optional D zusammen 100 Gew.-% ergibt;
wobei das teilkristalline Polymer A, das amorphe Polymer B und der Verträglichkeitsvermittler C (zusammen) in Form eines Polymerblends vorliegen;
und wobei das thermoplastische Polymerpulver P einen mittleren Partikeldurchmesser D₅₀ im Bereich von 5 bis 200 µm, bevorzugt 5 bis 150 µm, insbesondere bevorzugt 20 bis 100 µm, besonders bevorzugt von 30 bis 80 µm, aufweist.

Im Sinne der vorliegenden Erfindung meint "teilkristallines Polymer" ein Polymer, dass einen gewissen Anteil an kristallinen Bereichen enthält, welche aus strukturiert angeordneten Polymerketten bestehen. Typischerweise liegt der Kristallinitätsgrad (Gewichtsanteil oder molarer Anteil der kristallinen Bereiche bezogen auf das gesamten Polymer) eines teilkristallinen Polymers im Bereich von 10 bis 80 %. Der Anteil der kristallinen Bereiche kann beispielsweise mit Hilfe bekannter thermischer Analyseverfahren (z.B. Differential Scanning Calorimetry DSC, Differenz-Thermoanalyse DTA) oder durch Röntgenstrukturanalyse bestimmt werden kann.

Teilkristalline Polymere zeichnen sich durch eine Glasübergangstemperatur und meist einen mehr oder weniger eng begrenzten Schmelzpunkt aus.

Im Sinne der vorliegenden Erfindung meint "amorphes Polymer" ein Polymer, dass keinen oder einen nicht zu bestimmenden Anteil an geordneten, kristallinen Bereichen aufweist. Insbesondere liegt der Kristallinitätsgrad eines amorphen Polymers unter 10 %, bevorzugt unter 1 %. Amorphe Polymere weisen in der Regel eine Glasübergangstemperatur und einen breiten Erweichungsbereich auf.

Im Sinne der vorliegenden Erfindung bezeichnet der Begriff Polymerblend eine makroskopisch homogene Mischung aus mehreren verschiedenen Polymeren. Insbesondere wird ein Polymerblend durch Vermischen der verschiedenen Polymere (A, B und C) in der Schmelze hergestellt.

Der Ausdruck Polymer oder Copolymer enthaltend oder hergestellt aus Monomer oder Monomeren X wird vom Fachmann so verstanden, dass die Struktur des Polymers oder Copolymers in statistischer, blockweiser oder sonstiger Anordnung aufgebaut ist aus den Einheiten, welche den genannten Monomeren X entsprechen,. Entsprechend versteht der Fachmann beispielsweise den Ausdruck Acrylnitril-Butadien-Styrol-Copolymer (ABS) als Polymer enthaltend bzw. aufgebaut aus den Monomer-Einheiten basierend auf Acrylnitril, Butadien, Styrol. Der Fachmann weiß, das Polymere und Copolymere normalerweise neben den angegeben Monomer-Einheiten in geringer Menge andere Strukturen, beispielsweise Start- und Endgruppen aufweisen können.

Im Sinne der vorliegenden Erfindung ist unter einem Verfahren des Selektiven Lasersinterns (SLS) ein Verfahren der additiven Fertigung zur Herstellung eines dreidimensionalen Körpers mit Hilfe einer für das SLS geeigneten Vorrichtung zu verstehen.

### Komponente A

Als erfindungsgemäße Komponente A können bekannte teilkristalline thermoplastische Polymere, wie Polyamide, Polyoxymethylen (POM), Polyetherketonen (PEK), Polylactide (PLA), teilkristallines Polystyrol (isotaktisches PS und/oder syndiotaktisches PS), Polyethylenterephthalat (PET), Polybutylenterephthalat (PBT), Polyethylen (PE) oder Polypropylen (PP) verwendet werden. Die Komponente A ist im Polymerpulver zu 10 bis 89,9 Gew.-%, bevorzugt 30 bis 66 Gew.-%, oftmals 35 bis 60 Gew.-%, bezogen auf das gesamte Polymerpulver P, enthalten.

In einer bevorzugten Ausführungsform handelt es sich bei dem teilkristallinen Polymer A um mindestens ein teilkristallines Polyamid (PA). Geeignete Polyamide sind bekannte Homo- und Copolyamide sowie Mischungen hiervon.

Geeignete teilkristalline Homo-Polyamide werden typischerweise erhalten durch Polykondensation mindestens einer Aminocarbonsäure oder mindestens eines Lactams oder mindestens eines Diamins mit mindestens einer Dicarbonsäure. Geeignete Diamine sind beispielsweise Alkan- oder Cycloalkandiamine mit 4 bis 12, insbesondere 4 bis 8 Kohlenstoffatomen. Bevorzugt kann das mindestens eine Diamin ausgewählt sein aus Ethylendiamin; Hexamethylendiamin; Decamethylendiamin; 2,2,4- und/oder 2,4,4-Ttri-methylhexamethylendiamin; m- und/oder p-Xylylene-diamin; Bis-(4-aminocyclohexyl)-methan; 2,2'-Bis-(4-aminocyclohexyl)-propan; 3,3'-Dimethyl-4,4'-diaminodicyclohexylmethan; 3-Aminomethyl-3,5,5-trimethylcyclohexylamin; 2,5- und/oder 2,6-Bis-(aminomethyl)-norbornan und 1,4-Diaminomethylcyclohexan.

Geeignete Dicarbonsäuren sind beispielsweise Alkandicarbonsäuren mit 6 bis 12, insbesondere 6 bis 10 Kohlenstoffatomen. Bevorzugt ist die mindestens eine Dicarbonsäure ausgewählt aus Oxalsäure, 1,4-Butandicarbonsäure (Adipinsäure), 1,7-Heptandicarbonsäure (Azelainsäure), Decandicarbonsäure, Heptadecandicarbonsäure, 2,2,4- und/oder 2,4,4-Trimethyl-adipinsäure, 1,3-Benzoldicarbonsäure (Isophthalsäure) und 1,4-Benzoldicarbonsäure (Terephthalsäure).

Ebenso geeignet als Komponente A sind Copolyamide, welche erhalten werden durch Polykondensation von drei oder mehreren verschiedenen oben genannter Monomere, sowie Copolyamide erhalten durch Polykondensation der oben genannten Monomere unter Zugabe eines geringen Anteil, vorzugsweise bis etwa 10 Gew.-%, an anderen einkondensierbaren Bestandteilen, beispielsweise Aminocarbonsäuren, wie 6-Aminohexansäure (ε-Aminocapronsäure), 11-Aminoundecansäure (ω-Aminoundecansäure), 12-Aminododecansäure (ω-Aminolaurinsäure) und/oder deren Lactame.

Bevorzugt sind insbesondere Polyamid-6 (Polycaprolactam), Polyamid-6,6 (Polyhexamethylenadipinamid) und Polyamide, die zu mindestens 80 Gew.-% aus wiederkehrenden Einheiten der Formel -[-NH-(CH₂)₄-NH-CO-(CH₂)₄-CO-]- aufgebaut sind. Die zuletzt genannten Polyamide sind durch Kondensation von 1,4-Diaminobutan mit Adipinsäure erhältlich. Geeignete Herstellungsverfahren für Polyamide sind z.B. in EP-A 38 094, EP-A 38 582 und EP-A 39 524 beschrieben.

Ferner können die Formmassen als Komponente A ein teilaromatisches Copolyamid enthalten, so lange die geforderte Kristallinität des Polymers A gegeben ist.

Bevorzugte teilaromatische Copolyamide enthalten 40 bis 90 Gew.-% Einheiten, die sich von Terephthalsäure und Hexamethylendiamin ableiten. Ein geringer Anteil der Terephthalsäure, vorzugsweise nicht mehr als 10 Gew.-% der Gesamtmenge an eingesetzten aromatischen Dicarbonsäuren, kann durch Isophthalsäure oder andere aromatische Dicarbonsäuren ersetzt werden, vorzugsweise solche, in denen die Carboxylgruppen in para-Stellung stehen. Die teilaromatischen Copolyamide können zudem Einheiten von ε-Caprolactam als auch Einheiten von Adipinsäure und Hexamethylendiamin enthalten; in diesem Fall beträgt der Anteil an Einheiten, die frei von aromatischen Gruppen sind, bevorzugt mindestens 10 Gew.-%, vorzugsweise mindestens 20 Gew.-%. Das Verhältnis der Einheiten, die sich von ε-Caprolactam und von Adipinsäure und Hexamethylendiamin ableiten, unterliegt dabei keiner besonderen Beschränkung.

Weiterhin bevorzugt handelt es sich bei dem teilkristallinen Polymer A um mindestens ein teilkristallines Polyamid (PA) erhalten durch ringöffnende Polymerisation von Lactamen, welche 7 bis 12 Kohlenstoffatome im Ring aufweisen, insbesondere Caprolactam und/oder Lauryllactam.

Bevorzugt ist das teilkristalline Polymer A mindestens ein Polyamid ausgewählt aus der Gruppe bestehend aus Polycaprolactam (PA6), Polyhexamethylenadipamid (PA6,6); Polytetramethylenadipamid (PA4,6), Polypentamethylenadipamid (PA5,10), Polyhexamethylensebacamid (PA6,10), Polyenantholactam (PA7), Polyundecanolactam (PA11) und Polylauryllactam (Polydodecanolactam, PA12). Besonders bevorzugt handelt es sich bei Polymer A um mindestens ein Polyamid (PA) ausgewählt aus der Gruppe bestehend aus Polycaprolactam (PA6), Polyhexamethylenadipamid (PA6,6); Polyundecanolactam (PA11) und Polylauryllactam (Polydodecanolactam, PA12).

Als teilkristallines Polymer A können insbesondere auch Mischungen (Blends) der beschriebenen Polymere A, insbesondere Mischungen der beschriebenen teilkristallinen Polyamide, eingesetzt werden.

Typischerweise kann ein kommerziell erhältliches Polyamid, beispielsweise vom Typ Vestosint® (Evonik Industries), Vestamid® (Evonik Industries), Ultramid® (BASF SE), Miramid® (BASF SE), Zytel (DuPont), Ubesta® (Ube) oder Durethan® (Lanxess) eingesetzt werden.

Als erfindungsgemäße Komponente A können typischerweise auch andere, kommerziell erhältliche teilkristalline Polymere eingesetzt werden, beispielsweise vom Typ Ingeo® (Polylactid, Nature-Works) und/oder Xarec® (syndiotaktisches Polystryol, Idemitsu).

Weitere ausgewählte teilkristalline Polymere können sein: Polyetherketone (PEK), Poly¬butylenterephthalat (PBT), Polyethylen (PE) und Polypropylen (PP). Diese Polymere werden bevorzugt mit Verträglichkeitsvermittler C eingesetzt.

### Komponente B

Als amorphes Polymer B werden bekannte amorphe thermoplastische Polymere, insbesondere bekannte amorphe Styrolpolymere und/oder Styrol-Copolymerebeschrieben. Die erfindungsgemäße Komponente B ist im Polymerpulver in der Regel zu 10 bis 89 Gew.-%, bevorzugt 30 bis 66 Gew.-%, bezogen auf das gesamte Polymerpulver P, enthalten. Beschriebene amorphe Polymere B sind beispielsweise ausgewählt aus Styrol-Copolymeren, Styrol-Butadien-Blockcopolymeren, Poly(meth)acrylaten, amorphem Polystyrol (PS), und schlagzäh modifiziertem Polystyrol (HIPS).

Das amorphe Polymer B ist ein Styrolpolymer und/oder Styrol-Copolymer. Das erfindungsgemäß eingesetzte amorphe Polymer B ist mindestens ein Polymer ausgewählt aus Styrol-Butadien-Blockcopolymeren (SBC), Acrylnitril-Butadien-Styrol-Copolymeren (ABS), Styrol-Acrylnitril-Copolymeren (SAN), α(alpha)-Methylstyrol-Acrylnitril-Copolymeren (AMSAN), Acrylat-Styrol-Acrylnitril-Copolymeren (ASA), Methylmethacrylat-Acrylnitril-Butadien-Styrol-Copolymeren (MABS), Methylmethacrylat-Butadien-Styrol-Copolymeren (MBS), Styrol-Methylmethacrylat-Copolymeren (SMMA), amorphem Polystyrol (PS) und schlagzäh-modifiziertem Polystyrol (HIPS).

Als Styrolpolymer oder Styrol-Copolymer im Sinne der Erfindung ist ein Polymer umfassend mindestens 10 Gew.-% Styrol zu verstehen, wobei die oben beschriebenen teilkristallinen Styrolpolymere (isotaktisches und syndiotaktisches Polystyrol) ausgenommen sind.

In einer bevorzugten Ausführungsform handelt es sich bei dem amorphen thermoplastischen Polymer B um ein schlagzäh-modifiziertes Polystyrol (oder auch als kautschukmodifiziertes Polystyrol bezeichnet) (High impact polystyrene resin HIPS), enthaltend bevorzugt einen Polybutadien-Kautschuk und/oder einen Styrol-Butadien-Kautschuk. Beispielsweise können HIPS-Polymere vom Typ INEOS Styrolution® PS HIPS-Harze (INEOS Styrolution, Frankfurt) eingesetzt werden.

Beispielsweise kann als amorphes thermoplastisches Polymer B mindestens ein Styrol-Copolymer, ausgewählt aus der Gruppe bestehend aus Styrol-Butadien-Blockcopolymeren (SBC), Acrylnitril-Butadien-Styrol-Copolymeren (ABS), Styrol-Acrylnitril-Copolymeren(SAN), α(alpha)-Methylstyrol-Acrylnitril-Copolymeren (AMSAN), Acrylat-Styrol-Acrylnitril-Copolymeren (ASA), Methylmethacrylat-Acrylnitril-Butadien-Styrol-Copolymeren (MABS), Methylmethacrylat-Butadien-Styrol-Copolymeren (MBS) und Styrol-Methylmethacrylat-Copolymeren (SMMA), eingesetzt werden. Die genannten Styrol-Copolymere sind kommerziell erhältlich, beispielsweise von INEOS Styrolution.

In einer bevorzugten Ausführungsform handelt es sich bei dem amorphen Polymer B um mindestens ein Styrolpolymer oder Styrol-Copolymer, welches eine Schmelz-Volumenfließrate, gemessen gemäß ISO 1133 (220 °C und Belastung von 10 kg), im Bereich von 2 bis 60 cm³/10 min, bevorzugt 5 bis 40 cm³/10 min aufweist.

Besonders bevorzugt ist der Einsatz von leicht fließenden Styrol-Copolymere als amorphes Polymer B, insbesondere eines Acrylnitril-Butadien-Styrol-Copolymers (ABS) mit einer Schmelz-Volumenfließrate (Melt Volume Rate 220 °C/10 kg, gemessen gemäß ISO 1133) im Bereich von 5 bis 40 cm³/10 min, bevorzugt 10 bis 30 cm³/10 min.

In einer bevorzugten Ausführungsform handelt es sich bei dem amorphen Polymer B um mindestens ein ABS-Copolymer enthaltend (bevorzugt bestehend aus):
B1: 5 bis 95 Gew.-%, bevorzugt 40 bis 80 Gew.-%, mindestens eines thermoplastischen Copolymers B1 hergestellt aus:
   B1a: 50 bis 95 Gew.-%, bevorzugt 65 bis 80 Gew.-%, besonders bevorzugt 69 bis 80 Gew.-%, bezogen auf das Copolymer B1, eines Monomers B1a, ausgewählt aus Styrol, α-Methylstyrol oder Mischungen von Styrol und mindestens einem weiteren Monomer ausgewählt aus α-Methylstyrol, p-Methylstyrol und (Meth)acrylsäure-C₁-C₈-alkylester (z.B. Methylmethacrylat, Ethylmethacrylat, n-Butylacrylat, t-Butylacrylat),
   B1b: 5 bis 50 Gew.-%, bevorzugt 20 bis 35 Gew.-%, besonders bevorzugt 20 bis 31 Gew.-%, bezogen auf das Copolymer B1, eines Monomers B1b, ausgewählt aus Acrylnitril oder Mischungen von Acrylnitril und mindestens einem weiteren Monomer ausgewählt aus Methacrylnitril, Anhydriden ungesättigter Carbonsäuren (z.B. Maleinsäureanhydrid, Phthalsäureanhydrid) und Imiden ungesättigter Carbonsäuren (z.B. N-substituierte Maleimide, wie N-Cyclohexymaleimid und N-Phenylmaleimid),
B2: 5 bis 95 Gew.-%, bevorzugt 20 bis 60 Gew.-%, mindestens eines Pfropfcopolymers B2, enthaltend:
   B2a: 40 bis 85 Gew.-%, bevorzugt 50 bis 80 Gew.-%, besonders bevorzugt 55 bis 70 Gew.-%, bezogen auf das Pfropfcopolymer B2, mindestens einer Pfropfgrundlage B2a, welche erhalten wird durch Emulsionspolymerisation von:
   B2a1: 50 bis 100 Gew.-%, bevorzugt 80 bis 100 Gew.-%, bezogen auf die Pfropfgrundlage B2a, Butadien,
   B2a2: 0 bis 50 Gew.-%, bevorzugt 0 bis 20 Gew.-%, besonders bevorzugt 0 bis 10 Gew.-%, bezogen auf die Pfropfgrundlage B2a, mindestens eines weiteren Monomers B2a2 ausgewählt aus Styrol, α-Methylstyrol, Acrylnitril, Methacrylnitril, Isopren, Chloropren, C₁-C₄-Alkylstyrol, C₁-C₈-Alkyl(meth)acrylat, Alkylenglykol-di(meth)acrylat und Divinylbenzol;
   wobei die Summe B2a1 + B2a2 gerade 100 Gew.-% ergibt; und
B2b: 15 bis 60 Gew.-%, bevorzugt 20 bis 50 Gew.-%, besonders bevorzugt 30 bis 45 Gew.-%, bezogen auf das Pfropfcopolymer B2, einer Pfropfhülle B2b, welche erhalten wird durch Emulsionspolymerisation in Gegenwart der mindestens einen Pfropfgrundlage B2a von:
   B2b1: 50 bis 95 Gew.-%, bevorzugt 65 bis 80 Gew.-%, besonders bevorzugt 75 bis 80 Gew.-%, bezogen auf die Pfropfhülle B2b, eines Monomers B2b1, ausgewählt aus Styrol oder Mischungen von Styrol und mindestens einem weiteren Monomer ausgewählt aus α-Methylstyrol, p-Methylstyrol und (Meth)acrylsäure-C₁-C₈-alkylester (z. B. Methylmethacrylat, Ethylmethacrylat, n-Butylacrylat, t-Butylacrylat);
   B2b2: 5 bis 50 Gew.-%, bevorzugt 20 bis 35 Gew.-%, besonders bevorzugt 20 bis 25 Gew.-%, bezogen auf die Pfropfhülle B2b, eines Monomers B2b2, ausgewählt aus Acrylnitril oder Mischungen von Acrylnitril und mindestens einem weiteren Monomer ausgewählt aus Methacrylnitril, Anhydriden ungesättigter Carbonsäuren (z.B. Maleinsäureanhydrid, Phthalsäureanhydrid) und Imiden ungesättigter Carbonsäuren (z.B. N-substituierte Maleimide, wie N-Cyclohexymaleimid und N-Phenylmaleimid);
wobei die Gesamtsumme aus Pfropfgrundlage B2a und Pfropfhülle B2b gerade 100 Gew.-% ergibt.

In einer bevorzugten Ausführungsform handelt es sich bei Polymer B um ein Acrylnitril-Butadien-Styrol-Copolymer (ABS), beispielsweise vom Typ Terluran® oder Novodur® (INEOS Styrolution).

In einer weiteren bevorzugten Ausführungsform handelt es sich bei dem amorphen Polymer B um ein Styrol-Acrylnitril-Copolymer (SAN), insbesondere ein nicht kautschuk-modifiziertes Styrol-Acrylnitril-Copolymer, beispielsweise vom Typ Luran® (INEOS Styrolution), und/oder ein α-Methylstyrol-Acrylnitril-Copolymer (AMSAN), beispielsweise vom Typ Luran ® High Heat (INEOS Styrolution).

SAN-Copolymere und AMSAN-Copolymere enthalten im Allgemeinen 18 bis 35 Gew.-%, bevorzugt 20 bis 32 Gew.-%, besonders bevorzugt 22 bis 30 Gew.-% Acrylnitril (AN), und 82 bis 65 Gew.-%, bevorzugt 80 bis 68 Gew.-%, besonders bevorzugt 78 bis 70 Gew.-% Styrol (S) bzw. α-Methylstyrol (AMS), wobei die Summe aus Styrol bzw. α-Methylstyrol und Acrylnitril 100 Gew.-% ergibt.

Die eingesetzten SAN und AMSAN-Copolymere weisen im Allgemeinen eine mittlere Molmasse M_{w} von 80.000 bis 350.000 g/mol, bevorzugt von 100.000 bis 300.000 g/mol und besonders bevorzugt von 120.000 bis 250.000 g/mol auf.

In einer bevorzugten Ausführungsform handelt es sich bei dem amorphen Polymer B um mindestens ein SAN-Copolymer enthaltend (bevorzugt bestehend aus):
50 bis 95 Gew.-%, bevorzugt 65 bis 80 Gew.-%, besonders bevorzugt 69 bis 80 Gew.-%, insbesondere bevorzugt 71 bis 80 Gew.-%, bezogen auf das Polymer B, mindestens eines Monomers ausgewählt aus Styrol, α-Methylstyrol oder Mischungen von Styrol und α -Methylstyrol, und
5 bis 50 Gew.-%, bevorzugt 20 bis 35 Gew.-%, besonders bevorzugt 20 bis 31 Gew.-%, insbesondere bevorzugt 20 bis 29 Gew.-%, bezogen auf das Polymer B, eines Monomers ausgewählt aus Acrylnitril oder Mischungen von Acrylnitril und Methacrylnitril.

In einer weiteren bevorzugten Ausführungsform handelt es sich bei dem amorphen Polymer B um ein transparentes Methylmethacrylat-Acrylnitril-Butadien-Styrol-Copolymer (MABS), insbesondere um mindestens ein Copolymer vom Typ Terlux® (INEOS Styrolution) oder Toyolac® (Toray).

### Komponente C

Als Komponente C enthält das erfindungsgemäße thermoplastische Polymerpulver P mindestens einen Verträglichkeitsvermittler, wobei es sich bei dem Verträglichkeitsvermittler um ein Copolymer ausgewählt aus der Gruppe bestehend aus Styrol-Acrylnitril-Maleinsäureanhydrid-Terpolymeren, Styrol-N-Phenylmaleinimid-Maleinsäureanhydrid-Terpolymeren und Methylmethacrylat-Maleinsäureanhydrid-Copolymeren handelt. Bevorzugt wird als Verträglichkeitsvermittler C ein Styrol-Acrylnitril-Maleinsäureanhydrid-Terpolymer und/oder ein Styrol-N-Phenylmaleinimid-Maleinsäureanhydrid-Terpolymer eingesetzt.

Die Menge des Verträglichkeitsvermittlers C in den erfindungsgemäßen Polymerblends liegt von 0,1 bis 25 Gew.-%, vorzugsweise von 1 bis 20 Gew.-%, oftmals von 1 bis 15 Gew.-%, bevorzugt zwischen 2 und 10 Gew.-%. Insbesondere bevorzugt sind Mengen an C von 3 bis 10 Gew.-%, oftmals zwischen 4 und 7 Gew.-%.

Insbesondere ist der Verträglichkeitsvermittlers C im Polymerpulver P im Bereich von 0,1 bis 15 Gew.-%, bevorzugt 1 bis 10 Gew.-%, bezogen auf das gesamte Polymerpulver P, enthalten.

Geeignete Methylmethacrylat-Maleinsäureanhydrid-Copolymere, umfassend Methylmethacrylat, Maleinsäureanhydrid und optional ein weiteres vinylisch copolymerisierbares Monomer, sowie deren Verwendung als Verträglichkeitsvermittler sind in WO 98/27157 beschrieben.

In der Regel reagieren die Amino- bzw. Carboxyl-Endgruppen der Polyamide mit den funktionellen Gruppen der genannten Co- und Terpolymere, wobei in situ Copolymere entstehen, welche die Verträglichkeit zwischen der Styrol-Copolymer- und der Polyamidphase herstellen. Solche Polymermischungen mit modifizierter Grenzfläche werden im Allgemeinen als Polymer-Legierungen bezeichnet (L.A. Utracki, "Polymer Alloys and Blends", Hanser Verlag, 1989). Diese Verträglichkeitsvermittler tragen insbesondere zur Verbesserung der mechanischen Eigenschaften, wie Zugfestigkeit und Schlagzähigkeit, bei.

Die als Verträglichkeitsvermittler C verwendeten Copolymere haben im allgemeinen Molekulargewichte M_{W} im Bereich von 30.000 bis 500.000 g/mol vorzugsweise von 50.000 bis 250.000 g/mol, insbesondere von 70.000 bis 200.000 g/mol, bestimmt durch GPC unter Verwendung von Tetrahydrofuran (THF) als Eluent und mit Polystyrol-Kalibrierung.

Die als Verträglichkeitsvermittler C verwendeten Copolymere können in bekannter Weise durch radikalische Polymerisation der entsprechenden Monomere hergestellt werden. Die Polymerisation kann in Suspension, Emulsion, Lösung oder als Massepolymerisation erfolgen. Die radikalische Polymerisation kann in bekannter Weise thermisch, durch Licht oder bevorzugt mittels Radikalstarter, z.B. durch Peroxide wie Benzoylperoxid, gestartet werden. Eine geeignete Herstellmethode ist beispielsweise die Lösungspolymerisation, wobei die Monomer-Komponenten des Copolymers, z. B. Styrol, Maleinsäureanhydrid und Acrylnitril, in einem geeigneten Lösemittel, z. B. Methylethylketon (MEK), gelöst werden. Zu dieser Lösung werden ein oder gegebenenfalls mehrere chemische Radikalstarter (Initiatoren) hinzugesetzt. Bevorzugte Initiatoren sind z. B. Peroxide. Sodann wird das Gemisch für mehrere Stunden bei erhöhter Temperatur polymerisiert. Anschließend können das Lösemittel und die nicht umgesetzten Monomere in bekannter Weise entfernt werden. Ein Herstellverfahren ist zudem beispielsweise in WO 2005/040281, Seite 10, Zeile 31 bis Seite 11, Zeile 8, näher erläutert.

Die Menge an Maleinsäureanhydrid (MA) im Styrol-Acrylnitril-Maleinsäureanhydrid-Terpolymer oder im Styrol-N-Phenylmaleinimid-Maleinsäureanhydrid-Terpolymer kann in weiten Grenzen variieren und beträgt in der Regel 0,2 bis 4 Gew.-%, bevorzugt 0,4 bis 3 Gew.-%, besonders bevorzugt 0,8 und 2,3 Gew.-%, bezogen auf das gesamte Terpolymer. In diesem Bereich werden besonders gute mechanische Eigenschaften bezüglich Zugfestigkeit und Schlagzähigkeit erzielt.

Das Verhältnis zwischen Styrol und Acrylnitril im Styrol-Acrylnitril-Maleinsäureanhydrid-Terpolymer liegt vorzugsweise im Bereich von 80 : 20 bis 50 : 50. Das Verhältnis zwischen Styrol und N-Phenylmaleinimid im Styrol-N-Phenylmaleinimid-Maleinsäureanhydrid-Terpolymer liegt vorzugsweise im Bereich von 80 : 20 bis 50 : 50. Um die Mischbarkeit des Terpolymers oder Copolymers (Verträglichkeitsvermittler C) mit den Polymeren A und B zu verbessern, wird vorzugsweise eine Menge an Styrol ausgewählt, die der Menge an Vinylmonomeren im Styrol-Copolymer B entspricht.

Bevorzugt wird als Verträglichkeitsvermittler C mindestens ein Terpolymer auf Basis von Styrol, Acrylnitril und Maleinsäureanhydrid eingesetzt.

Bevorzugt beträgt der Anteil an Acrylnitril im Styrol-Acrylnitril-Maleinsäureanhydrid-Terpolymer, bezogen auf das gesamte Terpolymer, 10 bis 30 Gew.-%, besonders bevorzugt 15 bis 30 Gew.-%, insbesondere 20 bis 25 Gew.-%. In einer bevorzugten Ausführungsform enthält das erfindungsgemäße thermoplastische Polymerpulver P als Komponente C bevorzugt 0,1 bis 15 Gew.-%, bevorzugt 4 bis 10 Gew.-%, besonders bevorzugt 3 bis 7 Gew.-%, mindestens eines Terpolymer auf Basis von Styrol, Acrylnitril und Maleinsäureanhydrid.

Ferner können auch Styrol-N-Phenylmaleinimid-Maleinsäureanhydrid-Terpolymere eingesetzt werden, welche beispielsweise in EP-A-0 784 080, DE-A-100 24 935 sowie in DE-A-44 07 485 (hier Komponente B auf den Seiten 6 und 7) beschrieben sind.

### Komponente D

Das erfindungsgemäße thermoplastische Polymerpulver P kann optional mindestens ein Additiv und/oder mindestens einen Hilfsstoffe als weitere Komponente D enthalten. Die Komponente D ist von 0 bis 5 Gew.-%, oftmals von 0 bis 3 Gew.-%, häufig von 0,1 bis 3 Gew.-% in dem Polymerpulver enthalten.

Als Additive oder Hilfsstoffe kommen die dem Fachmann bekannten und im Stand der Technik (z.B. Plastics Additives Handbook, Herausgeber Schiller et al., 6. Auflage 2009, Hanser) beschriebenen Polymeradditive in Frage. Die Zugabe des Additives und/oder Hilfsstoffs kann sowohl bereits während des Compoundierens (Vermischen der polymeren Komponenten A, B und C in der Schmelze) als auch vor oder nach dem mechanischen Zerkleinern des Polymers erfolgen.

Bevorzugt ist die optionale Komponente D ausgewählt aus der Gruppe bestehend aus Antioxidantien, UV-Stabilisatoren, Stabilisatoren gegen Wärmezersetzung, Peroxidzerstörern, Antistatika, Gleitmitteln, Rieselhilfsmitteln, Entformungsmitteln, Keimbildungsmitteln, Weichmachern, faser- oder pulverförmigen Füll- und Verstärkungsmitteln (Glasfasern, Kohlefasern, etc.) und Färbemitteln, wie Farbstoffen und Pigmenten.

Gleit- und Entformungsmittel, welche in der Regel in Mengen bis zu 1 Gew.-% eingesetzt werden können, sind z.B. langkettige Fettsäuren wie Stearinsäure oder Behensäure, deren Salze (z.B. Ca- oder Zn-Stearat) oder Ester (z.B. Stearylstearat oder Pentaerythrit-Tetrastearat) sowie Amidderivate (z.B. Ethylenbisstearylamid). Zur besseren Verarbeitung können in Mengen bis zu 0,1 Gew.-% Antiblockmittel auf mineralischer Basis den erfindungsgemäßen Formmassen zugesetzt werden. Als Beispiele seien amorphe oder kristalline Kieselsäure, Calciumcarbonat oder Aluminiumsilikat genannt.

Als Additive zur Verbesserung der Fließ- und Rieselfähigkeit des Polymerpulvers sind Siliciumdioxid-Nanopartikel-Pulver (z.B. Aerosil® von Evonik) oder Siliconadditive (z.B. Genioplast® von Wacker) besonders gut geeignet. In einer bevorzugten Ausführungsform enthält das thermoplastische Polymerpulver P 0,01 bis 5 Gew.-%, bevorzugt 0,1 bis 3 Gew.-% mindestens eines Siliciumdioxid-Nanopartikel-Pulvers oder Siliconadditives als Additiv D.

Als Verarbeitungshilfsmittel kann beispielsweise Mineralöl, vorzugsweise medizinisches Weißöl, in Mengen bis zu 5 Gew.-%, vorzugsweise bis zu 2 Gew.-% eingesetzt werden.

Beispiele für geeignete Füll- und Verstärkungsmittel sind Kohlenstofffasern, Glasfasern, amorphe Kieselsäure, Calciumsilicat (Wollastonit), Aluminiumsilicat, Magnesiumcarbonat, Calciumcarbonat, Bariumsulfat, Kaolin, Kreide, gepulverter Quarz, Glimmer und Feldspat.

Typischerweise enthält das thermoplastische Polymerpulver P Additive und/oder Hilfsstoffe in einer Menge im Bereich von 0 bis 5 Gew.-%, bevorzugt 0 bis 3 Gew.-%, insbesondere 0,1 bis 5 Gew.-%, weiterhin bevorzugt 0,5 bis 3 Gew.-%, bezogen auf das gesamte Polymerpulver P. Die Obergrenzen der Komponenten A und/oder B im Polymerpulver P können bei Anwesenheit der optionalen Komponente D entsprechend angepasst werden (z.B. 10 bis 84,9 Gew.-% bzw. 10 bis 86,9 Gew.-% A oder B, bezogen auf Polymerpulver P).

Die optionale Komponente D kann während des Mischens der polymeren Komponenten A, B und C (Compoundieren), nach dem Compoundieren, während des mechanischen Zerkleinern oder nach dem mechanischen Zerkleinern des Polymers zugegeben werden.

Typischerweise ist die Viskosität des thermoplastischen Polymerpulvers P bei Scherraten von 1 bis 10 1/s und bei Temperaturen von 250 °C nicht höher als 1x10⁵ Pa*s. Typischerweise beträgt die Schmelz-Volumenfließrate (MVR, gemessen nach ISO 1133 bei 220°C und 10 kg Last) des Polymerpulvers P mehr als 6 cm³/10 min.

Für das Selektive Lasersintern ist es vorteilhaft ein Polymerpulver mit einer kontrollierten Partikelgröße zu verwenden. Das erfindungsgemäße thermoplastische Polymerpulver P weist einen mittleren Partikeldurchmesser D₅₀ im Bereich von 5 bis 200 µm, bevorzugt 5 bis 150 µm, insbesondere bevorzugt von 20 bis 100 µm auf.

Auch bevorzugt ist ein Bereich von 30 bis 80 µm, weiterhin bevorzugt 10 bis 100 µm, weiterhin bevorzugt von 20 bis 90 µm, auf. Partikelgrößen und Partikelgrößenverteilungen können mit Hilfe der bekannten Verfahren bestimmt werden, z.B. Siebanalyse, Lichtstreumessung, Ultrazentrifuge (z.B. beschrieben in W. Scholtan, H. Lange: Kolloid Z. u. Z. Polymere 250, S. 782-796, 1972).

Der mittlere Partikeldurchmesser D₅₀ ist der Durchmesser, der die Summenverteilung der Teilchenvolumina in zwei gleichgroße Teile aufteilt, d.h. 50% der Partikel sind größer und 50% sind kleiner als der Durchmesser D₅₀. Bei konstanter Dichte entspricht der Volumenanteil auch dem Masseanteil. Der Wert D₉₀ gibt die Partikelgröße an, bei der 90% der Partikel bezogen auf das Volumen bzw. die Masse kleiner als der angegebene Wert sind.

In einer bevorzugten Ausführungsform weist das erfindungsgemäße thermoplastische Polymerpulver P einen Partikeldurchmesser D₉₀ (bevorzugt bezogen auf den Volumenanteil) von weniger als 200 µm, bevorzugt von weniger als 180 µm, auf. In einer bevorzugten Ausführungsform weist das erfindungsgemäße thermoplastische Polymerpulver P einen Gewichtsanteil kleiner 1 % an Partikeln auf, deren Durchmesser größer als 200 µm, bevorzugt größer als 180 µm, ist. In einer bevorzugten Ausführungsform weist das erfindungsgemäße thermoplastische Polymerpulver P einen Gewichtsanteil größer als 80 %, bevorzugt größer 90 % an Partikeln auf, deren Durchmesser kleiner als 100 µm, bevorzugt kleiner als 80 µm, ist.

In einer weiteren bevorzugten Ausführungsform weist das erfindungsgemäße thermoplastische Polymerpulver P eine multimodale Partikelgrößenverteilung auf. Eine multimodale Partikelgrößenverteilung ist typischerweise eine Partikelgrößenverteilung, die mehr als ein Maximum aufweist. Die Partikelgrößenverteilung kann bevorzugt zwei, drei oder mehr Maxima besitzen. In einer bevorzugten Ausführungsform weist das erfindungsgemäße thermoplastische Polymerpulver P eine bimodale Partikelgrößenverteilung (dh eine Partikelgrößenverteilung mit zwei Maxima) auf. Ein Partikelgrößenmaximum liegt bei einem Wert im Bereich von 20 bis 100 µm, bevorzugt im Bereich von 30 bis 80 µm, ein weiteres Partikelgrößenmaximum liegt bei einem Wert im Bereich von 1 bis 30 µm, bevorzugt im Bereich von 5 bis 20 µm.

Eine bevorzugte Ausführungsform betrifft thermoplastische Polymerpulver P, welche zur Herstellung von transluzenten oder transparenten Bauteilen mittels Selektiven Lasersinterns geeignet sind.

Bei Verwendung der erfindungsgemäßen Polymerpulver P ist es zudem durch geeignete Auswahl der Komponenten A (teilkristallines Polymer), B (amorphes Polymer) und C (Verträglichkeitsvermittler) möglich, transluzente oder transparente Bauteile zu erzeugen. Eine Möglichkeit zur Erzeugung eines transparenten Bauteils ist die Verwendung eines so genannten Nanoblends, bei dem die einzelnen Polymerbestandteile zwar einen unterschiedlichen Brechungsindex aufweisen können, aber die Polymerbestandteile so fein verteilt sind, dass die Domänengrößen kleiner sind als die Wellenlänge des sichtbaren Lichts. Hindurchtretende Lichtstrahlen werden dann in der Regel nicht mehr an den Domänengrenzen gestreut und das Bauteil erscheint transparent. Derartige Nanoblends aus Polyamid und SAN oder ABS können durch geeignete Auswahl des Verträglichkeitsvermittlers C erzeugt werden.

Transparent oder transparentes Bauteil meint im Sinne der vorliegenden Erfindung, dass ein Bauteil vorliegt, das eine Lichtdurchlässigkeit (Transparenz), typischerweise gemessen nach ASTM D 1003 (Standard Test Method for Haze and Luminous Transmittance of Transparent Plastics) an einer 4 mm dicken Probe, von größer oder gleich 85 % aufweist.

Transluzent oder transluzentes Bauteil meint im Sinne der vorliegenden Erfindung, dass ein Bauteil vorliegt, das eine Lichtdurchlässigkeit (Transparenz), typischerweise gemessen nach ASTM D 1003 (Standard Test Method for Haze and Luminous Transmittance of Transparent Plastics) an einer 4 mm dicken Probe, von im Bereich von 1 bis 90 %, bevorzugt 5 bis 85 %, besonders bevorzugt 5 bis 84 %, weiterhin bevorzugt 50 bis 84 % aufweist.

In einer bevorzugten Ausführungsform betrifft die Erfindung ein thermoplastisches Polymerpulver P wie oben beschrieben enthaltend
(A) 30 bis 66 Gew.-%, bevorzugt 30 bis 65,9 Gew.-%, insbesondere bevorzugt 30 bis 63 Gew.-%, bezogen auf das gesamte Polymerpulver P, mindestens eines Polyamids ausgewählt aus Polycaprolactam (PA6), Polyhexamethylenadipamid (PA6,6); Polyundecanolactam (PA11) und Polylauryllactam (Polydodecanolactam, PA12), als teilkristallines Polymer A;
(B) 30 bis 66 Gew.-%, bevorzugt 30 bis 65,9 Gew.-%, insbesondere bevorzugt 30 bis 63 Gew.-%, bezogen auf das gesamte Polymerpulver P, mindestens eines Polymers ausgewählt aus Styrol-Butadien-Blockcopolymeren (SBC), Acrylnitril-Butadien-Styrol-Copolymeren (ABS), Styrol-Acrylnitril-Copolymeren (SAN), α(alpha)-Methylstyrol-Acrylnitril-Copolymeren (AMSAN), Acrylat-Styrol-Acrylnitril-Copolymeren (ASA), Methylmethacrylat-Acrylnitril-Butadien-Styrol-Copolymeren (MABS), Methylmethacrylat-Butadien-Styrol-Copolymeren (MBS), Styrol-Methylmethacrylat-Copolymeren (SMMA), amorphem Polystyrol (PS) und schlagzäh modifiziertem Polystyrol (HIPS), als amorphes Polymer B; bevorzugt mindestens eines Styrol-Acrylnitril-Copolymers (SAN) und/oder Acrylnitril-Butadien-Styrol-Copolymers (ABS), als amorphes Polymer B;
(C) 4 bis 10 Gew.-%, bezogen auf das gesamte Polymerpulver P, eines Styrol-Acrylnitril-Maleinsäureanhydrid-Terpolymers mit einem Anteil an Maleinsäureanhydrid im Bereich 0,4 bis 3 Gew.-%, besonders bevorzugt 0,8 bis 2,3 Gew.-%, bezogen auf das gesamte Terpolymer. als Verträglichkeitsvermittlers C;
(D1) 0,1 bis 3 Gew.-% mindestens eines Siliciumdioxid-Nanopartikel-Pulvers oder Siliconadditives als Rieselhilfsmittel und
(D2) optional 0 bis 3 Gew.-%, bezogen auf das gesamte Polymerpulver P, mindestens eines weiteren Additives und/oder Hilfsstoffes als weitere Komponente D.

### Verfahren zur Herstellung des thermoplastischen Polymerpulvers P

Die vorliegende Erfindung betrifft zudem ein Verfahren zur Herstellung des erfindungsgemäßen thermoplastischen Polymerpulvers P umfassend die folgenden Schritte:
i) Bereitstellen einer festen Mischung enthaltend (bevorzugt bestehend aus) die Komponenten A, B, C und optional D, bevorzugt erhalten durch Vermischen der Komponenten A, B und C (optional D) in der Schmelze, beispielsweise in einem Extruder, und Abkühlen der Schmelze;
ii) mechanisches Zerkleinern der festen Mischungen, insbesondere mittels Mahlen, Mikronisieren, Gefriermahlen (Kryomahlen) oder Jet-Mahlen;
wobei ein thermoplastische Pulver P erhalten wird, das einen mittleren Partikeldurchmesser D₅₀ im Bereich von 5 bis 200 µm, bevorzugt 5 bis 150 µm, insbesondere bevorzugt 20 bis 100 µm, besonders bevorzugt von 30 bis 80 µm aufweist.

Bevorzugt umfasst Schritt i) das Vermischen (Compoundieren) der Komponenten A, B und C im flüssigen Zustand, bevorzugt in der Schmelze, insbesondere bei einer Temperatur im Bereich von 200 bis 250 °C. Das Vermischen der Komponenten A, B und C sowie optional D wird typischerweise in einem geeigneten Extruder, beispielsweise einem Doppelschneckenextruder, durchgeführt. Grundsätzlich ist auch der Einsatz anderer bekannter Mischungsvorrichtungen, wie Brabender-Mühlen oder Banbury-Mühlen, möglich. Der Fachmann wählt die Compoundierungs-Bedingungen, wie z.B. die Compoundierungs-Temperatur, in Abhängigkeit der verwendeten Komponenten, insbesondere der polymeren Komponenten A und B. Eine möglichst intensive Durchmischung der Komponenten A, B und C sowie optional D ist dabei vorteilhaft.

Bevorzugt umfasst Schritt i) das Abkühlen und Pelletieren der Polymer-Mischung.

Bevorzugt erfolgt das mechanische Zerkleinern der festen Mischungen in Schritt ii) mittels Mahlen, Mikronisieren, Gefriermahlen (Kryomahlen) oder Jet-Mahlen. Geeignete Verfahren zum mechanischen Zerkleinern, insbesondere durch Mahlen, sind beispielsweise in Schmid, M., Selektives Lasersintern (SLS) mit Kunststoffen, S. 105-113 (Carl Hanser Verlag München 2015) beschrieben.

Thermoplastische Polymere lassen sich oftmals bei Zimmertemperatur nur schlecht zu sehr kleinen Partikelgrößen zerkleinern, da sie durch Erwärmen beim Mahlen zum Erweichen und Verklumpen neigen. Durch Kühlen während des Mahlvorgangs, etwa mittels Trockeneis, flüssigem CO₂ oder flüssigem Stickstoff, ist es möglich, auch thermoplastische Polymere zu sehr kleinen Partikelgrößen zu vermahlen, da sie dann eine ausreichende Sprödigkeit aufweisen. Das Verfahren des Gefriermahlens (Kryomahlen) zeichnet sich durch eine Kombination aus sehr niedrigen Temperaturen und eines mechanischen Mahlprozesses aus. Das Verfahren ist beispielsweise beschrieben in Liang, S. B. et al. (Production of Fine Polymer Powders under Cryogenic Conditions, Chem. Eng. Technol. 25 (2002), S. 401 - 405).

### Verfahren des Selektiven Lasersinterns

Die vorliegende Erfindung betrifft zudem ein Verfahren zur Herstellung eines dreidimensionalen Bauteils mittels des Selektiven Lasersinterns umfassend die Schritte:
x) Bereitstellen einer Pulverschicht bestehend aus dem erfindungsgemäßen thermoplastischen Polymerpulver P in einem Bauraum;
xi) ortsaufgelöstes Aufschmelzen mittels eines gerichteten Strahls elektromagnetischer Strahlung, bevorzugt mittels eines Laserstrahls, mittels Infrarot-Strahlung oder mittels UV-Strahlung, und anschließendes Erstarren des thermoplastischen Polymerpulvers P in einem definierten Bereich;
wobei die Schritte x) und xi) mehrmals durchgeführt werden, so dass durch Verbinden der Bereiche des aufgeschmolzenen und wieder erstarrten Polymers schichtweise ein dreidimensionales Bauteil erhalten wird.

Bevorzugt weist die Pulverschicht eine Dicke im Bereich von 100 bis 200 µm auf. Das Bereitstellen der Pulverschicht kann mit Hilfe eines Rakels, einer Rolle oder einer anderen geeigneten Vorrichtung erfolgen. Oftmals wird nach dem Bereitstellen der Pulverschicht das überschüssiges Polymerpulver mit einem Rakel oder einer Rolle abgetragen.

Typischerweise wird nach dem einmaligen Durchlaufen der Schritte x) und xi) der Bauraum abgesenkt und mit einer neuen Pulverschicht bestehend aus Polymerpulver P versehen. Typischerweise entsteht durch das schichtweise Schmelzen und Verfestigen der Pulverpartikel (Sintern) das Bauteil als Verbindung der einzelnen Schichten.

Geeignete Vorrichtungen zum Selektiven Lasersintern und für verwandte Verfahren der additiven Fertigung sind beispielsweise Formiga P 110, EOS P 396, EOSINT P 760 und EOSINT P 800 (Hersteller EOS GmbH), 251P und 402p (Hersteller Hunan Farsoon High-tech Co.,Ltd), ProX SLS 500, sPro 140, sPro 230 und sPro 60 (Hersteller 3D Systems Corporation), M3 (Hersteller Blueprinter) und Jet Fusion 3D (Hersteller Hewlett Packard Inc.). Im Falle der Vorrichtungen M3 (Hersteller Blueprinter) und Jet Fusion 3D (Hersteller Hewlett Packard Inc.) erfolgt das ortsaufgelöste Aufschmelzen mit Hilfe von Infrarot-Strahlung.

### Verwendung des thermoplastischen Polymerpulvers P

Die vorliegende Erfindung betrifft zudem eine Verwendung des erfindungsgemäßen thermoplastischen Polymerpulvers P zur Herstellung eines dreidimensionalen Bauteils mittels des Selektiven Lasersinterns (SLS) oder verwandter Verfahren der additiven Fertigung.

Bevorzugt betrifft die Erfindung die Verwendung zur Herstellung eines transparenten oder transluzenten Bauteils. Bevorzugt bezieht sich die Verwendung zur Herstellung eines transparenten oder transluzenten Bauteils auf die Verwendung eines thermoplastischen Polymerpulvers P enthaltend
(A) mindestens ein Polyamid, ausgewählt aus Polycaprolactam (PA6), Polyhexamethylenadipamid (PA6,6); Polyundecanolactam (PA11) und Polylauryllactam (Polydodecanolactam, PA12), als teilkristallines Polymers A;
(B) mindestens ein Styrol-Acrylnitril-Copolymer (SAN) und/oder Acrylnitril-Butadien-Styrol-Copolymer (ABS) als amorphes Polymers B;
(C) mindestens einen Verträglichkeitsvermittler C, ausgewählt aus der Gruppe bestehend aus Styrol-Acrylnitril-Maleinsäureanhydrid-Terpolymeren, Styrol-N-Phenylmaleinimid-Maleinsäureanhydrid-Terpolymeren und Methylmethacrylat-Maleinsäureanhydrid-Copolymeren;
wobei die Komponenten A, B und C in Form von Nanoblends vorliegen.

Die im Zusammenhang mit dem erfindungsgemäßen Polymerpulver P beschriebenen Ausführungsformen, z.B. hinsichtlich der Komponenten A, B, C und D gelten in entsprechender Weise für die erfindungsgemäßen Verfahren und die erfindungsgemäße Verwendung.

Die erhaltenen Bauteile können in vielfältiger Weise eingesetzt werden, beispielsweise als Bestandteil von Fahr- und Flugzeugen, Schiffen, Verpackungen, Sanitärartikeln, Medizinprodukten, Eingabegeräten und Bedienelementen, Laborgeräten- und Verbrauchsgütern, Maschinenteilen, Haushaltsgeräten, Mobiliar, Griffen, Dichtungen, Bodenbelägen, Textilien, Agrargeräten, Schuhsohlen, Gefäßen zur Aufbewahrung von Nahrungs- und Futtermitteln, Geschirr, Besteck, Filtern, Fernsprechgeräten oder als Prototyp oder Modell in Industrie, Design und Architektur.

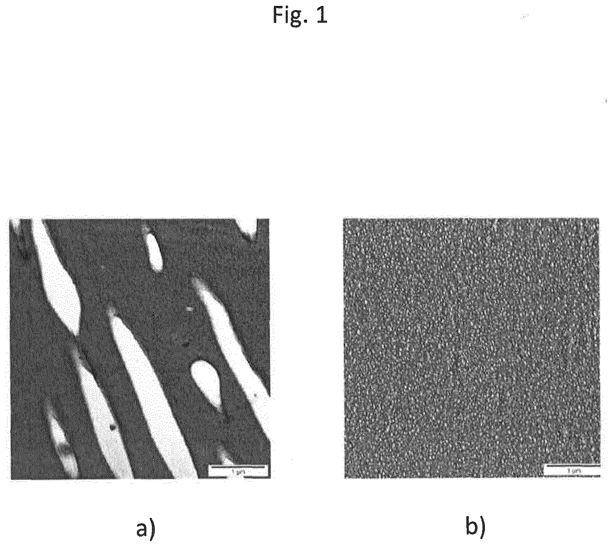

Figur 1 zeigt anhand eines fotografischen Beispiels (Maßstab: 1 Mikrometer), wie die Domänengröße eines PA/SAN-Blends mit einem Verträglichkeitsvermittler verkleinert werden kann, um so transparente polymere Bauteile zu erhalten. Das linke Bild a) zeigt die elektronenmikroskopische Aufnahme eines PA/SAN-Blends ohne Verträglichkeitsvermittler C. Das rechte Bild b) zeigt die elektronenmikroskopische Aufnahme eines PA/SAN-Blends mit einem Styrol-Acrylnitril-Maleinsäureanhydrid-Terpolymer als Verträglichkeitsvermittler C.

Die vorliegende Erfindung wird durch die folgenden Beispiele, Figuren und Ansprüche weiter erläutert.

### Beispiele

### 1.1 Verwendete Komponenten

Als Komponente A werden folgende teilkristallinen Polymere A1 bis A4 eingesetzt:

| | |
|---|---|
| A1 | PA12 (Vestosint® 1111, Evonik, Deutschland) |
| A2 | PA6 (Ultramid® B3, BASF SE, Ludwigshafen), |
| A3 | PLA (Ingeo 2500HP, NatureWorks und |
| A4 | syndiotaktisches Polystyrol (XAREC, Idemitsu, Japan) |

Als Komponente B1 wird ein leicht fließendes, schlagzähes Acrylnitril-Butadien-Styrolpolymer (ABS) vom Typ Terluran® (INEOS Styrolution, Frankfurt) mit einem Schmelz-Volumenfließrate (Melt Volume Rate 220 °C/10 kg Belastung, ISO 1133) von etwa 35 cm³/10 min eingesetzt.

Als Komponente B2 wird ein leicht fließendes, schlagzähes Styrol-Acrylnitril-Copolymer (SAN) vom Typ Luran® (INEOS Styrolution, Frankfurt) mit einer Schmelze-Volumenfließrate (Melt Volume Rate 220 °C/10 kg Belastung, ISO 1133) von etwa 7 cm³/10 min eingesetzt.

Als Komponente B3 wird ein schlagzähes amorphes Polystyrol (HIPS) (INEOS Styrolution, Frankfurt) mit einer Schmelze-Volumenfließrate (Melt Volume Rate 220 °C/10 kg Belastung, ISO 1133) von etwa 4 cm³/10 min eingesetzt.

Als Komponente C wird ein Acrylnitril-Maleinsäureanhydrid-Terpolymer (SAN MA) mit einem Anteil an Maleinsäureanhydrid von 2,1 Gew.-%, (INEOS Styrolution) eingesetzt.

Die teilkristalline Komponente A, die amorphe Komponente B und der Verträglichkeitsvermittler C werden in einem Doppelschneckenextruder bei einer Massetemperatur von 240°C bis 260°C gemischt. Nach dem Abkühlen und Erstarren der Schmelze wird das so hergestellte Compound granuliert.

Die so dargestellten festen Polymermischungen werden durch übliche Verfahren mikronisiert, beispielsweise durch Mahlen, Kryomahlen, Jet-Mahlen oder weitere bekannte Verfahren. Sie werden auf ihre Eignung für das Selektive Lasersintern geprüft.

Die Polymermischungen sind in der folgenden Tabelle 1 zusammengefasst.

**Tabelle 1: Zusammensetzungen der Polymerpulver**

| Probe | A1 | A2 | A3 | A4 | B1 | B2 | B3 | C |
|---|---|---|---|---|---|---|---|---|
| P1 | 35 | | | | 60 | | | 5 |
| P2 | | 35 | | | 60 | | | 5 |
| P3 | | | 35 | | 60 | | | 5 |
| P4 | | | | 35 | 60 | | | 5 |
| P5 | 47,5 | | | | 47,5 | | | 5 |
| P6 | 47,5 | | | | | 47,5 | | 5 |
| P7 | | 47,5 | | | 47,5 | | | 5 |
| P8 | | 47,5 | | | | 47,5 | | 5 |
| P9 | | | 47,5 | | 47,5 | | | 5 |
| P10 | | | | 47,5 | 47,5 | | | 5 |
| P11 | | | | 47,5 | | | 47,5 | 5 |
| P12 | 60 | | | | 35 | | | 5 |
| P13 | | 60 | | | 35 | | | 5 |
| P14 | | | 60 | | 35 | | | 5 |
| P15 | | | | 60 | 35 | | | 5 |
| V1 | 37,5 | | | | 67,5 | | | 0 |
| V2 | 50 | | | | 50 | | | 0 |
| V3 | 67,5 | | | | 37,5 | | | 0 |

Bei den Zusammensetzungen V1 bis V3 handelt es sich um Vergleichsversuche (ohne Zugabe des Verträglichkeitsvermittlers C).

Mit diesen Zusammensetzungen werden verschiedene selektive Lasersinter-Verfahren durchgeführt.

## Patentansprüche

1. Thermoplastisches Polymerpulver P enthaltend
(A) 10 bis 89,9 Gew.-%, bezogen auf das gesamte Polymerpulver P, mindestens eines teilkristallinen Polymers A;
(B) 10 bis 89,9 Gew.-%, bezogen auf das gesamte Polymerpulver P, mindestens eines amorphen Polymers B, wobei es sich bei dem amorphen Polymer B um mindestens ein Polymer ausgewählt aus Styrol-Butadien-Blockcopolymeren, Acrylnitril-Butadien-Styrol-Copolymeren, Styrol-Acrylnitril-Copolymeren, α(alpha)-Methylstyrol-Acrylnitril-Copolymeren, Acrylat-Styrol-Acrylnitril-Copolymeren, Methylmethacrylat-Acrylnitril-Butadien-Styrol-Copolymeren, Methylmethacrylat-Butadien-Styrol-Copolymeren, Styrol-Methylmethacrylat-Copolymeren, amorphem Polystyrol und schlagzäh modifiziertem Polystyrol, handelt;
(C) 0,1 bis 15 Gew.-%, bezogen auf das gesamte Polymerpulver P, mindestens eines Verträglichkeitsvermittlers C, ausgewählt aus der Gruppe bestehend aus Styrol-Acrylnitril-Maleinsäureanhydrid-Terpolymeren, Styrol-N-Phenylmaleinimid-Maleinsäureanhydrid-Terpolymeren und Methylmethacrylat-Maleinsäureanhydrid-Copolymeren;
(D) optional 0 bis 5 Gew.-%, bezogen auf das gesamte Polymerpulver P, mindestens eines Additives und/oder Hilfsstoffes;
wobei die Summe der Gew.-% der Komponenten A, B, C und optional D zusammen 100 Gew.-% ergibt;
wobei das teilkristalline Polymer A, das amorphe Polymer B und der Verträglichkeitsvermittler C in Form eines Polymerblends vorliegen;
und wobei das thermoplastische Pulver P einen mittleren Partikeldurchmesser D₅₀ im Bereich von 5 bis 200 µm aufweist.

2. Thermoplastisches Polymerpulver P gemäß Anspruch 1, **dadurch gekennzeichnet, dass** es sich bei dem teilkristallinen Polymer A um mindestens ein Polymer ausgewählt aus Polyamiden, Polyetherketonen, Polylactiden, Polybutylenterephthalat, Polyethylen, Polypropylen und syndiotaktischem Polystyrol handelt.

3. Thermoplastisches Polymerpulver P gemäß Anspruch 1 oder 2, **dadurch gekennzeichnet, dass** es sich bei dem teilkristallinen Polymer A um mindesten ein Polyamid, ausgewählt aus PA6 (Polycaprolactam); PA6,6 (Polyhexamethylenadipamid); PA4,6 (Polytetramethylenadipamid); PA5,10 (Polypentamethylenadipamid); PA6,10 (Polyhexamethylensebacamid); PA7 (Polyenantholactam); PA11 (Polyundecanolactam) und PA12 (Polylauryllactam), handelt.

4. Thermoplastisches Polymerpulver P gemäß einem der Ansprüche 1 bis 3, **dadurch gekennzeichnet, dass** es sich bei dem amorphen Polymer B um mindestens ein Styrolpolymer oder Styrol-Copolymer handelt, welches einen Volumen-Schmelzflussindex, gemessen gemäß ISO 1133, bei 220 °C und mit einer Belastung von 10 kg, im Bereich von 2 bis 60 cm³/10 min aufweist.

5. Thermoplastisches Polymerpulver P gemäß einem der Ansprüche 1 bis 4, **dadurch gekennzeichnet, dass** das Polymerpulver P einen Partikeldurchmesser D₉₀ von weniger als 200 µm aufweist.

6. Thermoplastisches Polymerpulver P gemäß einem der Ansprüche 1 bis 5 enthaltend
(A) 30 bis 66 Gew.-%, bezogen auf das gesamte Polymerpulver P, mindestens eines Polyamids ausgewählt aus Polycaprolactam PA6, Polyhexamethylenadipamid PA6,6; Polyundecanolactam PA11 und Polylauryllactam PA12, als teilkristallines Polymer A;
(B) 30 bis 66 Gew.-%, bezogen auf das gesamte Polymerpulver P, mindestens eines Polymers ausgewählt aus Styrol-Butadien-Blockcopolymeren, Acrylnitril-Butadien-Styrol-Copolymeren, Styrol-Acrylnitril-Copolymeren, α(alpha)-Methylstyrol-Acrylnitril-Copolymeren, Acrylat-Styrol-Acrylnitril-Copolymeren, Methylmethacrylat-Acrylnitril-Butadien-Styrol-Copolymeren, Methylmethacrylat-Butadien-Styrol-Copolymeren, Styrol-Methylmethacrylat-Copolymeren, amorphem Polystyrol und schlagzäh modifiziertem Polystyrol, als amorphes Polymer B;
(C) 4 bis 10 Gew.-%, bezogen auf das gesamte Polymerpulver P, eines Styrol-Acrylnitril-Maleinsäureanhydrid-Terpolymer mit einem Anteil an Maleinsäureanhydrid im Bereich 0,4 bis 3 Gew.-%, bezogen auf das gesamte Terpolymer, als Verträglichkeitsvermittlers C;
(D1) 0,1 bis 3 Gew.-% mindestens eines Siliciumdioxid-Nanopartikel-Pulvers oder Siliconadditives als Rieselhilfsmittel, und
(D2) optional 0 bis 3 Gew.-%, bezogen auf das gesamte Polymerpulver P, mindestens eines weiteren Additives und/oder Hilfsstoffes als weitere Komponente D.

7. Verfahren zur Herstellung eines thermoplastischen Polymerpulvers P gemäß einem der Ansprüche 1 bis 6 umfassend die folgenden Schritte:
i) Bereitstellen einer festen Mischung enthaltend die Komponenten A, B, C und optional D;
ii) mechanisches Zerkleinern der festen Mischungen, wobei ein thermoplastisches Polymerpulver P erhalten wird, das einen mittleren Partikeldurchmesser D₅₀ im Bereich von 5 bis 200 µm aufweist.

8. Verfahren zur Herstellung eines thermoplastischen Polymerpulvers P gemäß Anspruch 7, **dadurch gekennzeichnet, dass** Schritt i) das Vermischen der Komponenten A, B und C im flüssigen Zustand bei einer Temperatur im Bereich von 200 bis 250 °C umfasst.

9. Verfahren zur Herstellung eines thermoplastischen Polymerpulvers P gemäß einem der Ansprüche 7 oder 8, **dadurch gekennzeichnet, dass** das mechanische Zerkleinern der festen Mischungen in Schritt ii) mittels Mahlen, Mikronisieren, Gefriermahlen oder Jet-Mahlen erfolgt.

10. Verfahren zur Herstellung eines dreidimensionalen Bauteils mittels des Selektiven Lasersinterns umfassend die Schritte:
x) Bereitstellen einer Pulverschicht, bestehend aus dem thermoplastischen Polymerpulver P nach einem der Ansprüche 1 bis 6, in einem Bauraum;
xi) ortsaufgelöstes Aufschmelzen mittels eines gerichteten Strahls elektromagnetischer Strahlung und anschließendes Erstarren des thermoplastischen Polymerpulvers P in einem definierten Bereich;
wobei die Schritte x) und xi) mehrmals durchgeführt werden, so dass durch Verbinden der Bereiche des aufgeschmolzenen und wieder erstarrten Polymers schichtweise ein dreidimensionales Bauteil erhalten wird.

11. Verfahren zur Herstellung eines dreidimensionalen Bauteils gemäß Anspruch 10, **dadurch gekennzeichnet, dass** die Pulverschicht eine Dicke im Bereich von 100 bis 200 µm aufweist.

12. Verwendung des thermoplastischen Polymerpulvers P nach einem der Ansprüche 1 bis 6 zur Herstellung eines dreidimensionalen Bauteils mittels Selektiven Lasersinterns oder verwandter Verfahren der additiven Fertigung.

13. Verwendung gemäß Anspruch 12, **dadurch gekennzeichnet, dass** es sich um die Herstellung eines transparenten oder transluzenten Bauteils handelt.

## Claims

1. Thermoplastic polymer powder P comprising
(A) from 10 to 89.9% by weight, based on the entire polymer powder P, of at least one semicrystalline polymer A;
(B) from 10 to 89.9% by weight, based on the entire polymer powder P, of at least one amorphous polymer B, where the amorphous polymer B is at least one polymer selected from styrene-butadiene block copolymers, acrylonitrile-butadiene-styrene copolymers, styrene-acrylonitrile copolymers, α(alpha)-methylstyrene-acrylonitrile copolymers, acrylate-styrene-acrylonitrile copolymers, methyl methacrylate-acrylonitrile-butadiene-styrene copolymers, methyl methacrylate-butadiene-styrene copolymers, styrene-methyl methacrylate copolymers, amorphous polystyrene and impact-modified polystyrene;
(C) from 0.1 to 15% by weight, based on the entire polymer powder P, of at least one compatibilizer C, selected from the group consisting of styrene-acrylonitrile-maleic anhydride terpolymers, styrene-N-phenylmaleimide-maleic anhydride terpolymers and methyl methacrylate-maleic anhydride copolymers;
(D) optionally from 0 to 5% by weight, based on the entire polymer powder P, of at least one additive and/or auxiliary;
where the sum of the % by weight values of components A, B, C and optionally D is 100% by weight;
where the semicrystalline polymer A, the amorphous polymer B and the compatibilizer C are present in the form of a polymer blend;
and where the D₅₀ median particle diameter of the thermoplastic powder P is in the range from 5 to 200 µm.

2. Thermoplastic polymer powder P according to Claim 1, **characterized in that** the semicrystalline polymer A is at least one polymer selected from polyamides, polyetherketones, polylactides, polybutylene terephthalate, polyethylene, polypropylene and syndiotactic polystyrene.

3. Thermoplastic polymer powder P according to Claim 1 or 2, **characterized in that** the semicrystalline polymer A is at least one polyamide, selected from PA6 (polycaprolactam); PA6,6 (polyhexamethyleneadipamide); PA4,6 (polytetramethyleneadipamide); PA5,10 (polypentamethyleneadipamide); PA6,10 (polyhexamethylenesebacamide); PA7 (polyenantholactam); PA11 (polyundecanolactam) and PA12 (polylaurolactam).

4. Thermoplastic polymer powder P according to any of Claims 1 to 3, **characterized in that** the amorphous polymer B is at least one styrene polymer or styrene copolymer which has a volume melt flow index in the range from 2 to 60 cm³/10 min, measured in accordance with ISO 1133, at 220°C and with a load of 10 kg.

5. Thermoplastic polymer powder P according to any of Claims 1 to 4, **characterized in that** the D₉₀ particle diameter of the polymer powder P is less than 200 µm.

6. Thermoplastic polymer powder P according to any of Claims 1 to 5 comprising
(A) from 30 to 66% by weight, based on the entire polymer powder P, of at least one polyamide selected from polycaprolactam PA6, polyhexamethyleneadipamide PA6,6; polyundecanolactam PA11 and polylaurolactam PA12, as semicrystalline polymer A;
(B) from 30 to 66% by weight, based on the entire polymer powder P, of at least one polymer selected from styrene-butadiene block copolymers, acrylonitrile-butadiene-styrene copolymers, styrene-acrylonitrile copolymers, α(alpha)-methylstyrene-acrylonitrile copolymers, acrylate-styrene-acrylonitrile copolymers, methyl methacrylate-acrylonitrile-butadiene-styrene copolymers, methyl methacrylate-butadiene-styrene copolymers, styrene-methyl methacrylate copolymers, amorphous polystyrene and impact-modified polystyrene, as amorphous polymer B;
(C) from 4 to 10% by weight, based on the entire polymer powder P, of a styrene-acrylonitrile-maleic anhydride terpolymer with maleic anhydride content in the range from 0.4 to 3% by weight, based on the entire terpolymer, as compatibilizer C;
(D1) from 0.1 to 3% by weight of at least one silicon dioxide nanoparticle powder or silicone additive as powder-flow aid, and
(D2) optionally from 0 to 3% by weight, based on the entire polymer powder P, of at least one further additive and/or auxiliary as further component D.

7. Process for the production of a thermoplastic polymer powder P according to any of Claims 1 to 6 comprising the following steps:
i) provision of a solid mixture comprising components A, B, C and optionally D;
ii) mechanical comminution of the solid mixture, whereupon a thermoplastic polymer powder P is obtained which has a D₅₀ median particle diameter in the range from 5 to 200 µm.

8. Process for the production of a thermoplastic polymer powder P according to Claim 7, **characterized in that** step i) comprises the mixing of components A, B and C in the liquid state at a temperature in the range from 200 to 250°C.

9. Process for the production of a thermoplastic polymer powder P according to Claim 7 or 8, **characterized in that** the mechanical comminution of the solid mixture in step ii) is achieved by means of grinding, micronizing, freeze-grinding or jet-milling.

10. Process for the production of a three-dimensional component by means of selective laser sintering comprising the steps of:
x) provision of a powder layer consisting of the thermoplastic polymer powder P according to any of Claims 1 to 6, in a construction chamber;
xi) localized melting by means of a directed beam of electromagnetic radiation, followed by solidification of the thermoplastic polymer powder P in a defined region;
where the steps x) and xi) are repeated so that a three-dimensional component is obtained layer-by-layer via bonding of the regions of the molten and resolidified polymer.

11. Process for the production of a three-dimensional component according to Claim 10, **characterized in that** the thickness of the powder layer is in the range from 100 to 200 µm.

12. Use of the thermoplastic polymer powder P according to any of Claims 1 to 6 for the production of a three-dimensional component by means of selective laser sintering or of related processes of additive manufacturing.

13. Use according to Claim 12, **characterized in that** it involves the production of a transparent or translucent component.

## Revendications

1. Poudre polymère P thermoplastique contenant
(A) 10 à 89,9% en poids, par rapport à la totalité de la poudre polymère P, d'au moins un polymère partiellement cristallin A ;
(B) 10 à 89,9% en poids, par rapport à la totalité de la poudre polymère P, d'au moins un polymère amorphe B, où il s'agit, pour le polymère amorphe B, d'au moins un polymère choisi parmi les copolymères séquencés de styrène-butadiène, les copolymères d'acrylonitrile-butadiène-styrène, les copolymères de styrène-acrylonitrile, les copolymère d'α(alpha)-méthylstyrène-acrylonitrile, les copolymères d'acrylate-styrène-acrylonitrile, les copolymères de méthacrylate de méthyle-acrylonitrile-butadiène-styrène, les copolymères de méthacrylate de méthyle-butadiène-styrène, les copolymères de styrène-méthacrylate de méthyle, le polystyrène amorphe et le polystyrène à résilience modifiée ;
(C) 0,1 à 15% en poids, par rapport à la totalité de la poudre polymère P, d'au moins un promoteur de compatibilité C, choisi dans le groupe constitué par les terpolymères de styrène-acrylonitrile-anhydride de l'acide maléique, les terpolymères de styrène-N-phénylmaléinimide-anhydride de l'acide maléique et les copolymères de méthacrylate de méthyle-anhydride de l'acide maléique ;
(D) éventuellement 0 à 5% en poids, par rapport à la totalité de la poudre polymère P, d'au moins un additif et/ou adjuvant ;
la somme des % en poids des composants A, B, C et éventuellement D valant au total 100% en poids ;
le polymère partiellement cristallin A, le polymère amorphe B et le promoteur de compatibilité C se trouvant sous forme d'un mélange de polymères ;
et le polymère thermoplastique P présentant un diamètre moyen de particule D₅₀ dans la plage de 5 à 200 µm.

2. Poudre polymère P thermoplastique selon la revendication 1, **caractérisée en ce qu'**il s'agit, pour le polymère partiellement cristallin A, d'au moins un polymère choisi parmi les polyamides, les polyéthercétones, les polylactides, le poly(téréphtalate de butylène), le polyéthylène, le polypropylène et le polystyrène syndiotactique.

3. Poudre polymère P thermoplastique selon la revendication 1 ou 2, **caractérisée en ce qu'**il s'agit, pour le polymère partiellement cristallin A, d'au moins un polyamide, choisi parmi le PA6 (polycaprolactame) ; le PA6,6 (polyhexaméthylène-adipamide) ; le PA4,6 (polytétraméthylène-adipamide) ; le PA5,10 (polypentaméthylène-adipamide) ; le PA6,10 (polyhexaméthylène-sébacamide) ; le PA7 (polyénantholactame) ; le PA11 (polyundécanolactame) et le PA12 (polylauryllactame).

4. Poudre polymère P thermoplastique selon l'une quelconque des revendications 1 à 3, **caractérisée en ce qu'**il s'agit, pour le polymère amorphe B, d'au moins un polymère de styrène ou copolymère de styrène, qui présente un indice de fluidité à chaud en volume, mesuré selon la norme ISO 1133, à 220°C et sous une charge de 10 kg, dans la plage de 2 à 60 cm³/10 min.

5. Poudre polymère P thermoplastique selon l'une quelconque des revendications 1 à 4, **caractérisée en ce que** la poudre polymère P présente un diamètre de particule D₉₀ inférieur à 200 µm.

6. Poudre polymère P thermoplastique selon l'une quelconque des revendications 1 à 5, contenant
(A) 30 à 66% en poids, par rapport à la totalité de la poudre polymère P, d'au moins un polyamide choisi parmi le polycaprolactame PA6, le polyhexaméthylène-adipamide PA6,6 ; le polyundécanolactame PA11 et le polylauryllactame PA12, en tant que polymère partiellement cristallin A ;
(B) 30 à 66% en poids, par rapport à la totalité de la poudre polymère P, d'au moins un polymère choisi parmi les copolymères séquencés de styrène-butadiène, les copolymères d'acrylonitrile-butadiène-styrène, les copolymères de styrène-acrylonitrile, les copolymères d'α(alpha)-méthylstyrène-acrylonitrile, les copolymères d'acrylate-styrène-acrylonitrile, les copolymères de méthacrylate de méthyle-acrylonitrile-butadiène-styrène, les copolymères de méthacrylate de méthyle-butadiène-styrène, les copolymères de styrène-méthacrylate de méthyle, le polystyrène amorphe et le polystyrène à résilience modifiée en tant que polymère amorphe B ;
(C) 4 à 10% en poids, par rapport à la totalité du polymère P, d'un terpolymère de styrène-acrylonitrile-anhydride de l'acide maléique présentant une proportion d'anhydride de l'acide maléique dans la plage de 0,4 à 3% en poids, par rapport à la totalité du terpolymère, en tant que promoteur de compatibilité C ;
(D1) 0,1 à 3% en poids d'au moins une poudre de nanoparticules de dioxyde de silicium ou additif à base de silicium en tant qu'adjuvant d'écoulement et
(D2) éventuellement 0 à 3% en poids, par rapport à la totalité de la poudre polymère P, d'au moins un autre additif et/ou adjuvant en tant qu'autre composant D.

7. Procédé pour la préparation d'une poudre polymère P thermoplastique selon l'une quelconque des revendications 1 à 6, comprenant les étapes suivantes :
i) préparation d'un mélange solide contenant les composants A, B, C et éventuellement D ;
ii) broyage mécanique du mélange solide, une poudre polymère P thermoplastique étant obtenue qui présente un diamètre moyen de particule D₅₀ dans la plage de 5 à 200 µm.

8. Procédé pour la préparation d'une poudre polymère P thermoplastique selon la revendication 7, **caractérisé en ce que** l'étape i) comprend le mélange des composants A, B et C à l'état liquide à une température dans la plage de 200 à 250°C.

9. Procédé pour la préparation d'une poudre polymère P thermoplastique selon l'une quelconque des revendications 7 ou 8, **caractérisé en ce que** le broyage mécanique du mélange solide dans l'étape ii) est réalisé par broyage, micronisation, broyage cryogène ou broyage par jets.

10. Procédé pour la fabrication d'une pièce tridimensionnelle par frittage sélectif au laser, comprenant les étapes de :
x) préparation d'une couche de poudre, constituée par la poudre polymère P thermoplastique selon l'une quelconque des revendications 1 à 6, dans un espace de construction ;
xi) fusion à résolution locale au moyen d'un rayon dirigé de rayonnement électromagnétique et solidification consécutive de la poudre polymère P thermoplastique dans une zone définie ;
les étapes x) et xi) étant réalisées plusieurs fois de telle sorte que par liaison des zones de polymère fondu et de nouveau solidifié, on obtient par stratification une pièce tridimensionnelle.

11. Procédé pour la préparation d'une pièce tridimensionnelle selon la revendication 10, **caractérisé en ce que** la couche de poudre présente une épaisseur dans la plage de 100 à 200 µm.

12. Utilisation de la poudre polymère P thermoplastique selon l'une quelconque des revendications 1 à 6 pour la fabrication d'une pièce tridimensionnelle par frittage sélectif au laser ou par des procédés apparentés de la fabrication additive.

13. Utilisation selon la revendication 12, **caractérisée en ce qu'**il s'agit de la fabrication d'une pièce transparente ou translucide.
